# EUROPÄISCHE PATENTSCHRIFT

(11) **EP 0 423 629 B1**
(45) Veröffentlichungstag und Bekanntmachung des Hinweises auf die Patenterteilung: **31.03.1993**
(21) Anmeldenummer: 90119549.5
(22) Anmeldetag: 12.10.1990
(51) Int. Cl.: B23K 9/127

(54) **Verfahren zur Steuerung eines Lichtbogen-Schweisskopfes**
Method of controlling an arc welding head
Méthode de commande d'une tête de soudage à l'arc

(30) Priorität: 20.10.1989 DE 3935053
(43) Veröffentlichungstag der Anmeldung: 24.04.1991
(73) Patentinhaber: Eichhorn, Friedrich, Professor Dr.-Ing., D-52074 Aachen (DE)
(72) Erfinder: Lüttmann, Ulrich, Dipl.-Ing., W-5100 Aachen (DE)
(74) Vertreter: Selting, Günther, Dipl.-Ing.

(56) Entgegenhaltungen:
- EP-A- 0 111 110
- EP-A- 0 193 864
- SCHWEISSEN UND SCHNEIDEN. vol. 42, no. 11, November 1990, DUSSELDORF DE & Borowka: "Prozessorientiertes Schweisskopfführungssystem für das Metall-Schutzgas-Engspaltschweissen"

## Beschreibung

Die Erfindung betrifft ein Verfahren zur Steuerung eines Lichtbogen-Schweißkopfes nach dem Oberbegriff des Patentanspruchs 1 (siehe z. B. DE-A-26 31 250).

Beim Lichtbogenschweißen wird eine exakte Führung des Lichtbogen-Schweißkopfes entlang der Fuge der zu verschweißenden Bauteile in einem definierten Abstand angestrebt. Beim automatischen Lichtbogenschweißen mit einem Schweißkopf, der sich auf einer festen, vorprogrammierten Bahn entlang der Schweißfuge bewegt, ist eine automatische Korrektur der Schweißkopfposition relativ zur Fuge erforderlich, da Fügeteiltoleranzen und Lageänderungen der Fügeteile durch freiwerdende Schrumpfspannungen die Lage der Nähte relativ zur ideal vorprogrammierten Bewegungsbahn verändern.

Bei einem bekannten Schweißkopfführungssystem (DE-PS 26 31 250) führt der entlang der Schweißfuge bewegte Schweißkopf eine Pendelbewegung quer zum Fugenverlauf aus. In den zeitlich aufeinanderfolgenden und örtlich einander gegenüberliegenden Umkehrbereichen der Lichtbogen-Pendelbewegung wird der jeweilige Schweißstrom gemessen und die Differenz der Schweißströme zur Führung des Schweißkopfes ausgewertet. Damit wird zwar eine Bahnverfolgung entlang der Fuge ermöglicht, jedoch wird dabei die Ausrichtung (Orientierung) der Schweißkopfachse stets konstant gehalten.

Bei einem anderen Verfahren zur Steuerung maschineller Schweißvorgänge unter Verwendung des Schweißlichtbogens als Sensor (DE-PS 25 33 448) bleibt der elektrodenseitige Lichtbogen-Ansatzpunkt in unveränderter Position, während der werkstückseitige Lichtbogen-Fußpunkt durch eine äußere Kraft abwechselnd zur einen oder anderen Seite quer zur Schweißfuge ausgeschwenkt wird. Dabei werden die in den Fugenflanken gemessenen Schweißstrom- und Spannungswerte zur Führung des Schweißkopfes ausgewertet. Auch dieses Verfahren befaßt sich ausschließlich mit der Bahnverfolgung der Fuge.

Bei den zuvor beschriebenen bekannten Verfahren erfolgt zwar die Bahnverfolgung längs der Schweißfuge selbsttätig, d.h. es wird sichergestellt, daß der Schweißpunkt mit konstanter Bahngeschwindigkeit der Schweißfuge folgt, jedoch ändert sich dabei die Brennerorientierung entlang des Fugenverlaufes. Dies bedeutet, daß die Schweißkopfachse ihre Ausrichtung im ortsfesten Koordinatensystem stets beibehält. Wenn beispielsweise der Brennerorientierungs-Winkel derart gewählt ist, daß der Schweißkopf in einem Bahnabschnitt "stechend" schweißt, wird in einem anderen Bahnabschnitt der bogenförmigen Fuge "neutral" und in wiederum einem anderen Bahnabschnitt "schleppend" geschweißt, wenn die Schweißkopfachse nicht entsprechend dem Bahnverlauf verändert wird. Bei den zuvor beschriebenen bekannten Verfahren erfolgt die Veränderung des Brennerorientierungs-Winkels häufig dadurch, daß einzelne Kurvenabschnitte des Fugenverlaufs vom Benutzer in einem Rechner programmiert werden. Der Rechner berechnet dann für jeden Kurvenabschnitt den Fugentangenten-Winkel und stellt die Schweißkopfachse entsprechend ein. Während also das Regelsystem für die Bahnverfolgung dafür sorgt, daß der Schweißpunkt der tatsächlichen Fuge folgt, wird die Ausrichtung der Schweißkopfachse vorprogrammiert. Dies hat zur Folge, daß ein solches Verfahren wirtschaftlich nur in der Serienfertigung anwendbar ist, weil sich eine entsprechende Programmierung des Bahnverlaufs für Einzelanfertigungen nicht lohnt.

Bekannt ist ferner ein lichtbogengesteuertes Schweißkopfführungssystem für das Zweidraht-Lichtbogenschweißen (DE-PS 35 07 012), welches die Führung des Schweißkopfes entlang eines beliebig gekrümmten Bahnverlaufes ohne Programmierung ermöglicht. Durch die Anwendung spezieller Auswertealgorithmen wird eine Konstanthaltung der Schweißkopforientierung relativ zur Naht in Verbindung mit einer konstanten Schweißgeschwindigkeit tangential zum Fugenverlauf erzielt. Hierbei werden die Strom- oder Spannungswerte der beiden Drahtelektroden zur Nachführung ausgewertet, wobei der Schweißkopf keine Pendelbewegungen quer zur Fuge ausführen muß. Dieses System erfordert eine versetzte Anordnung der beiden Drahtelektroden beim Kehlnahtschweißen in Horizontalposition. Die in Schweißrichtung gesehene vorlaufende Drahtelektrode schneidet die senkrechte Fugenflanke wenige Millimeter oberhalb vom Wurzelpunkt entfernt. Eine Parallelanordnung der beiden Drahtelektroden zur Erzielung eines flacheren Einbrandes der beiden Lichtbögen ist mit diesem Schweißkopfführungssystem nicht möglich. Darüber hinaus berücksichtigt dieses System lediglich Fugenverläufe, die sich im wesentlichen auf die Horizontalebene beschränken.

Der Erfindung liegt die Aufgabe zugrunde, ein Verfahren der im Oberbegriff des Patentanspruchs 1 angegebenen Art zu schaffen, bei dem die Orientierung der Schweißkopfachse zum Fugenverlauf ohne Vorprogrammierung konstant gehalten wird, so daß es ausreicht, den Schweißkopf zu Beginn des Schweißvorganges in der gewünschten Orientierung an die Schweißfuge anzusetzen, und bei dem diese relative Orientierung zur Schweißfuge automatisch beibehalten wird.

Die Lösung dieser Aufgabe erfolgt erfindungsgemäß mit den im Patentanspruch 1 angegebenen Merkmalen.

Bei dem erfindungsgemäßen Verfahren wird in jedem Raumpunkt der Schweißfuge der momentane Fugentangenten-Winkel aus dem Verhältnis der translatorischen Bewegungen in X- und Y-Richtung ermittelt, wobei der Fugentangenten-Winkel der auf die Referenzebene senkrecht projizierte Winkel zwischen der momentanen Vorschubrichtung des Schweißkopfes und der Y-Achse ist. Der Brennerorientierungswinkel, nämlich der senkrecht auf die Referenzebene projizierte Winkel zwischen der Brennerachse und der Y-Achse wird dem Fugenverlauf ständig angepaßt, indem er in gleichem Maße verändert wird wie der Fugentangenten-Winkel. Durch die ständige Anpassung des Brennerorientierungswinkels wird der Brenner-Fugen-Winkel, d.h. der relative Winkel zwischen der Schweißkopfachse und der Fugentangente (projiziert auf die Referenzebene), während des Schweißvorganges konstant gehalten.

Zur Herstellung einer Schweißnaht wird der Schweißkopf am Anfangspunkt der Schweißfuge mit einem fest vorgegebenen Brenner-Fugen-Winkel an die Schweißfuge angesetzt. Die Nachführung des Schweißkopfes mit einer konstanten Bahngeschwindigkeit entlang der Schweißfuge erfolgt dann unter Beibehaltung dieses Brenner-Fugen-Winkels vollautomatisch, ohne daß eine Programmierung des Fugenverlaufes erforderlich wäre.

Für die Ermittlung der Korrekturwerte für die Schweißkopfbewegungen werden die Fugenflanken abgetastet und die Schweißstrom- und/oder Spannungswerte im Bereich der Fugenflanken gemessen. Die Abtastung der Fugenflanken kann bei dem Verfahren zur Steuerung des Schweißkopfes durch einen quer zum Fugenverlauf mechanisch gependelten Schweißkopf erfolgen, wobei die Schweißströme oder -spannungen in den Pendelendlagen gemessen werden. Anstelle einer mechanischen Pendelbewegung des Schweißkopfes ist es auch möglich, den werkstückseitigen Lichtbogen-Fußpunkt durch eine äußere Kraft abwechselnd quer zur Schweißfuge auszulenken, um die in den Fugenflanken gemessenen Schweißstrom- und Spannungswerte zur Führung des Schweißkopfes auszuwerten. Ferner ist das Verfahren auf Positionssteuerungen des Schweißkopfes anwendbar, bei denen eine Abtastung der Fugenflanken gleichzeitig durch zwei parallel zueinander geführten Schweißelektroden erfolgt. Bei diesem Zwei-Elektroden-Schweißverfahren sind Pendelbewegungen des Schweißkopfes quer zur Fuge nicht erforderlich, weil die Auswerteelektronik kontinuierlich alle erforderlichen Informationen über die Lage des Schweißkopfes relativ zur Fuge erhält.

In ähnlicher Weise wie der Brenner-Fugen-Winkel konstant gehalten wird, kann in Weiterbildung der Erfindung auch der Brenner-Fugen-Neigungswinkel konstant gehalten werden, indem die Neigung des Brenners entsprechend der sich ändernden Fugenneigung verändert wird. Wenn die Fuge in einem dreidimensionalen System entlang einer Rampe aufsteigt, deren Steigung sich ändert, ändert sich die Schrägstellung des Brenners in gleichem Maße, so daß der Brenner-Neigungswinkel dem Fugen-Neigungswinkel ständig angepaßt wird.

Nach dem erfindungsgemäßen Verfahren erfolgt die Anpassung der Ausrichtung des Brenners an den jeweiligen Fugenverlauf, wobei eine solche Anpassung auch dann gewährleistet ist, wenn die Fuge nicht in einer einzigen Ebene liegt, sondern im dreidimensionalen Raum verläuft. Die Lage der Referenzebene (XY-Ebene) des Handhabungs- oder Robotersystems, welches den Schweißkopf führt, muß entsprechend dem jeweiligen Anwendungsfall vom Benutzer festgelegt werden. Bei einem Fugenverlauf in einer einzigen Ebene wird man diese Ebene als Referenzebene wählen. Verläuft die Fuge beispielsweise um ein Rohr von beliebigem Querschnitt herum und hat der Fugenverlauf eine Komponente in Rohrlängsrichtung, dann wird man als Referenzebene eine Ebene wählen, die senkrecht zur Rohrlängsrichtung verläuft. Bei anderen räumlich komplexen Fugenverläufen wird die Lage der Referenzebene nach anderen Kriterien gewählt, beispielsweise danach, daß die Projektion der Fuge auf die Referenzebene eine Fläche minimaler Größe beansprucht.

Das erfindungsgemäße Verfahren ist mit besonderem Vorteil bei Kehlnähten anwendbar, wobei der Brenner-Anstellwinkel e von 0° verschieden ist.

Das Verfahren wird zweckmäßigerweise so durchgeführt, daß der momentane Fugentangenten-Winkel und ggf. der momentane Fugen-Neigungswinkel anhand der Geschwindigkeiten in X-Richtung, Y-Richtung und ggf. in Z-Richtung festgestellt werden. Aus den Geschwindigkeitswerten, die sich aus der Bahnkorrekturregelung ergeben, kann dann zweckmäßigerweise die momentane Winkelgeschwindigkeit des Fugentangenten-Winkels ermittelt werden, also diejenige Geschwindigkeit, mit der der Schweißkopf verschwenkt werden muß, um den Brenner-Fugen-Winkel wieder auf den konstant zu haltenden Wert zu bringen. Diese Winkelgeschwindigkeit kann durch einen Soll-Ist-Wert-Vergleich ermittelt werden, indem der errechnete Soll-Wert des Fugentangenten-Winkels mit dem am Koordinatensystem des Roboters gemessenen Ist-Wert verglichen wird. Die Verdrehgeschwindigkeit, mit der der Schweißkopf verschwenkt wird, ist von der Differenz zwischen Soll-Wert und Ist-Wert abhängig und sie wird Null, wenn der Ist-Wert den Soll-Wert erreicht hat.

Im folgenden werden unter Bezugnahme auf die Zeichnungen Ausführungsbeispiele der Erfindung näher erläutert.

Es zeigen:
- Fig. 1: einen Schweißroboter in schematischer Darstellung,
- Fig. 2: eine schematische Darstellung der Fuge und der Nachführung des Fugentangenten-Winkels in Draufsicht auf die Referenzebene,
- Fig. 3: eine schematische Anordnung des Schweißkopfes beim Kehlnahtschweißen eines gekrümmten ebenen Fugenverlaufes in perspektivischer Darstellung,
- Fig. 4: ein schematisches Ablaufdiagramm der Berechnung der Geschwindigkeitswerte für die drei Koordinatenrichtungen und die Verdrehung des Schweißkopfes bei dem System von Fig. 3,
- Fig. 5: eine Seitenansicht (parallel zur Referenzebene) eines dreidimensionalen Fugenverlaufes mit Darstellung der Änderung des Brenner-Neigungswinkels in Abhängigkeit vom Fugen-Neigungswinkel,
- Fig. 6: eine perspektivische Darstellung eines dreistufigen Fugenverlaufes mit den entsprechenden Koordinatenrichtungen und Vektoren, und
- Fig. 7: ein schematisches Ablaufdiagramm der Berechnung der Geschwindigkeitswerte des Ausführungsbeispiels von Fig. 6 für die drei Koordinatenrichtungen und die Drehungen um die drei Koordinatenachsen.

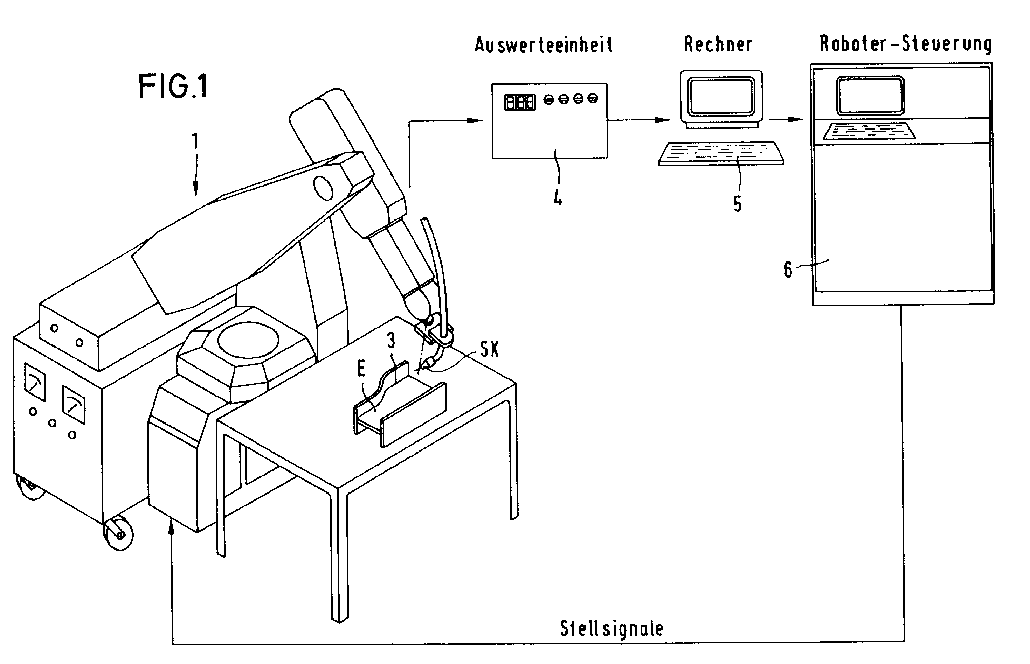

Fig. 1 zeigt einen verfahrbaren Schweißroboter 1, dessen Schweißkopf SK in einem ortsfesten Koordinatensystem bewegbar ist, wobei die XY-Ebene eine horizontale Referenzebene E bildet. Zur Herstellung einer Schweißnaht wird der Schweißkopf SK an der in der Referenzebene liegenden gekrümmten Schweißfuge 3 angesetzt. Der Schweißkopf SK ist zur Referenzebene E um einen fest vorgegebenen Anstellwinkel geneigt. Während des Schweißvorganges führt der Schweißkopf hin und her gehende Bewegungen quer zur Schweißfuge aus, wobei der Schweißlichtbogen die Schweißfuge durchquert. Dabei werden Strom und/oder Spannung des Schweißlichtbogens gemessen. In den Endlagen der Querbewegung werden von der Auswerteeinheit 4 einerseits die Summe und andererseits die Differenz der beiden in den unterschiedlichen Endlagen gemessenen Werte ermittelt. In Abhängigkeit von den gemessenen Strömen bzw. Spannungen werden die für die Nachführung des Schweißkopfes entlang der Schweißfuge 3 erforderlichen Korrekturwerte für die Schweißkopfbewegung in einem Rechner 5 berechnet und der Robotersteuerung 6 zugeführt, die die Stellsignale für die Steuerung des Schweißkopfes SK erzeugt.

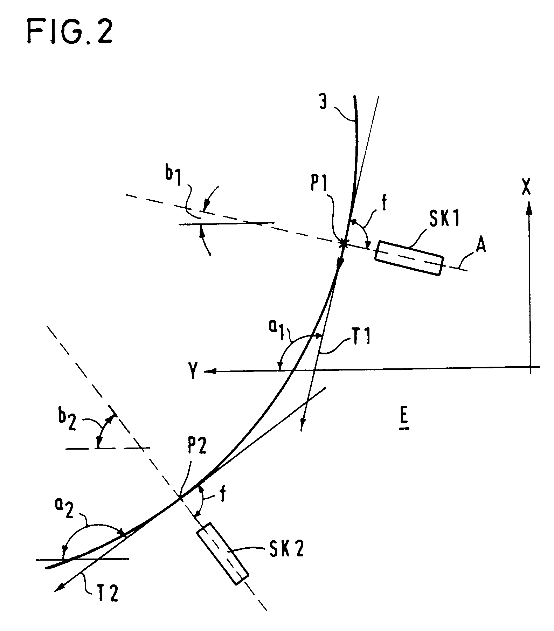

Fig. 2 zeigt eine schematische Draufsicht auf die Referenzebene E, in der die orthogonalen Koordinaten X und Y eines Koordinatensystems verlaufen.

Es sei angenommen, daß die Fuge 3, die einen bogenförmigen Verlauf hat, eine Kehlnahtfuge ist, so daß der Schweißkopf nicht senkrecht von oben auf die Fuge 3 gerichtet wird, sondern schräg von oben, also mit einem Anstellwinkel. Die Schweißkopfachse ist mit A bezeichnet und sie schneidet die Ebene E (und die Fuge 3) im Schweißpunkt.

Es sei angenommen, daß der Schweißkopf sich zunächst in der Position SK1 befindet und dabei im Schweißpunkt P1 schweißt. Im Schweißpunkt P1 verläuft die Fugentangente T1 unter einem Winkel a₁ zur Y-Achse. Die Achse A des Schweißkopfes schließt mit der Y-Achse (in Projektion auf die Referenzebene E) den Brennerorientierungswinkel b₁ ein. Der Schweißkopf ist in der Position SK1 so ausgerichtet, daß sich ein ganz bestimmter Brenner-Fugen-Winkel f zwischen der Achse A und der Fugentangente T1 (in Projektion auf die Ebene E) ergibt. Wenn dieser Brenner-Fugen-Winkel f kleiner ist als 90°, wird stechend geschweißt, und wenn er größer ist als 90°, wird schleppend geschweißt. Das erfindungsgemäße Verfahren bewirkt, daß der einmal eingestellte Brenner-Fugen-Winkel f während der Bahnverfolgung entlang der Fuge konstant gehalten wird.

Durch das bekannte Nachführverfahren wird erreicht, daß der Brenner aus der Position SK1 heraus der Fuge 3 derart folgt, daß der Schweißpunkt stets auf der Fuge bleibt. Dabei würde jedoch normalerweise die Achse A lediglich parallel verschoben, so daß die Brennerausrichtung beibehalten würde.

Bei dem erfindungsgemäßen Verfahren wird im Schweißpunkt P1 der Fugentangenten-Winkel a₁ gemessen, den die Fugentangente T1 mit der Y-Achse einschließt. Im darauffolgenden Schweißpunkt P2 wird ebenfalls der Fugentangenten-Winkel a₂ gemessen, den die Fugentangente T2 mit der Y-Achse einschließt. Bei dem vorliegenden Beispiel ist a₂ um einen Differenzbetrag Δa größer als a₁.

Im Schweißpunkt P1 wird der Brennerorientierungswinkel b₁ zwischen der Achse A und der Y-Achse (in Projektion auf die Referenzebene E) gemessen und im Schweißpunkt P2 wird zu dem früheren Brennerorientierungswinkel b₁ ein Differenzbetrag Δ b hinzuaddiert, der gleich dem Differenzbetrag Δa ist. Auf diese Weise wird erreicht, daß der Brennerorientierungswinkel b stets um das gleiche Maß verändert wird wie der Fugentangenten-Winkel a. Auf diese Weise bleibt die Orientierung des Schweißkopfes in Bezug auf die Fuge 3 in jeder Stellung erhalten. Hat die Fuge 3 beispielsweise den Verlauf eines Vollkreises, dann bewegt sich der Schweißkopf außen um diesen Vollkreis herum.

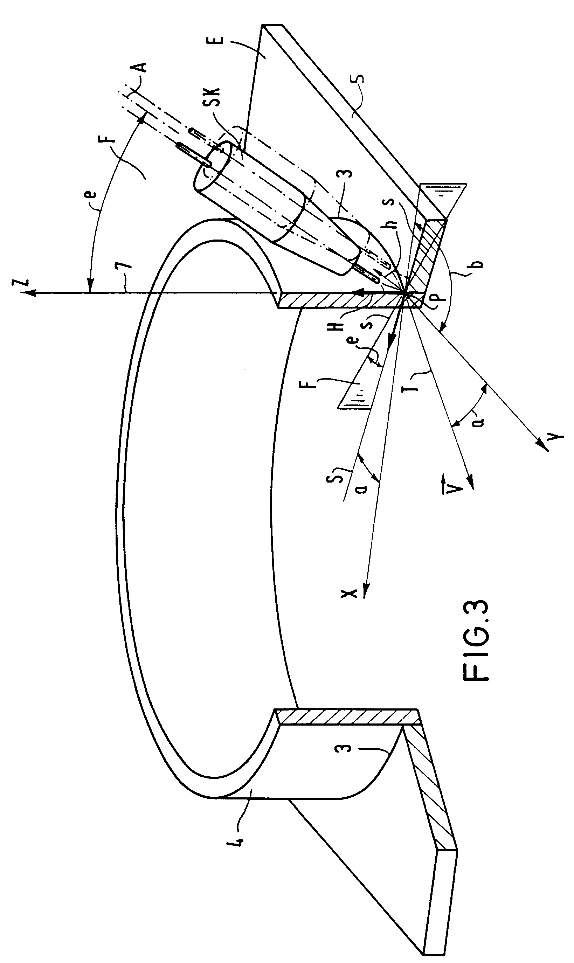

Fig. 3 zeigt die schematische Anordnung des Schweißkopfes SK oder Brenners beim Kehlnahtschweißen längs einer ebenen kreisförmigen Schweißfuge 3 an der Außenwandung eines Rohrstutzens 4, der mit einer Platte 5 verschweißt wird. Der Schweißkopf wird in einem ortsfesten kartesischen Koordinatensystem bewegt, dessen XY-Ebene eine Referenzebene E bildet. Die Referenzebene liegt bei ebenen Kurvenverläufen in der Ebene der Schweißfuge 3, wobei die Referenzebene nicht zwangsläufig in der Horizontalebene liegen muß.

Die senkrecht auf der Referenzebene stehende Z-Achse ist hier so angeordnet, daß sie die Schweißkopfachse A im Bereich der Schweißfuge 3 schneidet. Die Schweißkopfachse A ist gegenüber der Z-Achse um den Schweißkopfanstellwinkel e geneigt. Der Schweißkopfanstellwinkel e ist eine fest vorgegebene Größe und wird während des Schweißvorganges nicht verändert. Beim Schweißen von kurvenförmigen Stumpfstößen ist der Schweißkopf senkrecht zur Referenzebene E ausgerichtet, d.h. der Schweißkopfanstellwinkel e ist gleich Null.

Der Schweißkopf wird mit einer konstanten Bahngeschwindigkeit v längs der Fuge 3 bewegt. Um die Fugenflanke abzutasten, führt der Schweißkopf im Bereich der Fuge 3 eine seitliche Pendelbewegung in einer Ebene F aus, die senkrecht zur Fugentangente T verläuft. Bei einer seitlichen Abweichung des Schweißkopfes SK aus der Fugenmitte ergeben sich Unterschiede in den freien Draht- und Lichtbogenlängen und daraus resultierend Unterschiede in den elektrischen Betriebsdaten des Lichtbogens für die Pendelendlagen. Die Differenz der Schweißströme läßt sich zur Korrektur des Schweißkopfes in Schweißkopf-Seitenrichtung s in der Ebene F senkrecht zur Schweißkopfachse A verwenden. Die für diese Korrektur in Richtung s erforderliche Korrekturgeschwindigkeit s in Seitenrichtung wird nach den eingangs erläuterten bekannten Verfahren vektoriell ermittelt. Zur Abtastung in Schweißkopf-Höhenrichtung bzw. -Achsrichtung h erfolgt ein Vergleich der Summe der beiden Schweißströme in den Pendelendlagen mit einem vorgegebenen Soll-Wert. Daraus erhält man die Regelabweichung zur Bestimmung der Korrekturgeschwindigkeiten ḣ in Richtung h der Schweißkopfachse A. Die Berechnung der Korrekturgeschwindigkeiten ṡ und ḣ erfolgt im Rechner 5.

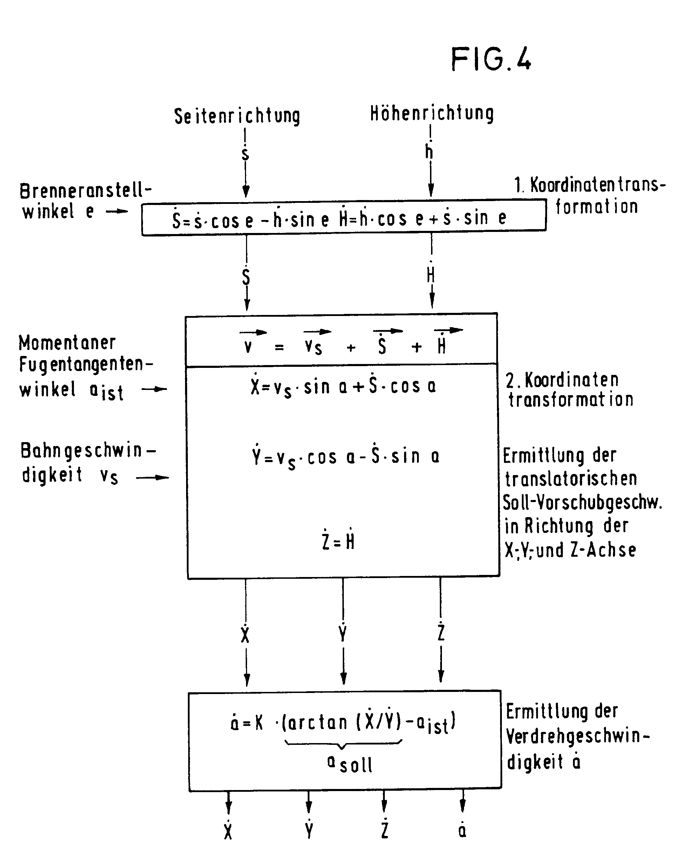

Beim Schweißen von Kehlnähten ist der Schweißkopf um den Anstellwinkel e schräggestellt. Das sh-Koordinatensystem wird daher gemäß Fig. 4 in einer 1. Koordinatentransformation zunächst in ein SH-Koordinatensystem transformiert, dessen S-Achse die Projektion der s-Richtung auf die Referenzebene darstellt und dessen H-Achse parallel zur Z-Achse verläuft. Dabei werden die Korrekturgeschwindigkeiten ṡ und ḣ in die Korrekturgeschwindigkeiten Ṡ und Ḣ in Fugen-Seitenrichtung S und Fugenhöhenrichtung H, bezogen auf die Referenzebene E umgerechnet.

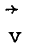 ist die Geschwindigkeit, mit der der Schweißkopf bewegt werden muß, damit die vorgegebene Bahngeschwindigkeit 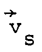 längs der Fuge entsteht. Diese Geschwindigkeit wird durch vektorielle Addition der vorgegebenen konstanten Bahngeschwindigkeit vₛ mit den berechneten Korrekturgeschwindigkeiten 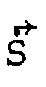 und 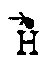 in Fugen-Höhen und -Seitenrichtung ermittelt.

Um den Schweißkopf mit der Soll-Vorschubgeschwindigkeit längs der Schweißfuge durch Überlagerung der translatorischen Bewegungen in Richtung der drei ortsfesten Raumachsen X,Y,Z des Robotersystems verfahren zu können, wird die ermittelte Soll-Vorschubgeschwindigkeit v gemäß Fig. 4 über eine 2. Koordinatentransformation in die drei Komponenten in Richtung der X-, der Y- und der Z-Achse umgerechnet. Für die in den Fign. 2 und 3 dargestellten Fälle eines ebenen Fugenverlaufs berechnen, sich die Soll-Vorschubgeschwindigkeiten Ẋ,Ẏ und Ż. längs der drei Raumachsen gemäß Fig. 4 aus der konstanten Bahngeschwindigkeit vₛ und den Korrekturgeschwindigkeiten in Fugenhöhen- und Seitenrichtung Ḣ,Ṡ in Abhängigkeit von dem gemessen momentanen Fugentangenten-Winkel aᵢₛₜ.

Der zu messende Fugentangentenwinkel aᵢₛₜ ist der auf die Referenzebene E projizierte Winkel zwischen der momentanen Vorschubrichtung (Fugentangente T) und der Y-Achse und gibt die Stellung des Schweißkopfes an.

Mit den bisher beschriebenen Berechnungen und Einstellungen der Geschwindigkeiten Ẋ,Ẏ,Ż wird erreicht, daß der Schweißstrahl der Fuge mit der vorgegebenen konstanten Bahngeschwindigkeit folgt, jedoch würde ohne zusätzliche Maßnahmen der Schweißkopf seine Orientierung im ortsfesten X,Y,Z-System unverändert beibehalten.

Zur Orientierungsanpassung der Schweißkopfausrichtung an den sich ändernden Fugenverlauf wird der Soll-Fugentangentenwinkel aₛₒₗₗ aus dem Verhältnis der translatorischen Soll-Vorschubgeschwindigkeiten Ẋ,Ẏ in Richtung der X- und der Y-Achse nach der Gleichung im unteren Kasten von Fig. 4 ermittelt.

Der Soll-Fugentangentenwinkel aₛₒₗₗ ist der auf die Referenzebene E projizierte Winkel zwischen der Soll-Vorschubrichtung und der Y-Achse. Aus der Differenz zwischen dem berechneten Soll-Fugentangentenwinkel aₛₒₗₗ und dem vom Roboter gemessenen Ist-Fugentangenten-Winkel aᵢₛₜ wird eine zu der Differenz proportionale Verdrehgeschwindigkeit ȧ ermittelt. K ist ein vorgegebener Proportionalitätsfaktor.

Zur Orientierungsanpassung führt der Schweißkopf mit der zuvor berechneten Verdrehgeschwindigkeit a eine rotatorische Bewegung um eine zur Z-Achse parallele, durch den momentanen Schweißpunkt P hindurchgehende Drehachse 7 aus. Der Verdrehwinkel, um den dabei der Schweißkopf verschwenkt wird, ist gleich groß wie die Änderung Δa (aₛₒₗₗ - aᵢₛₜ) des Fugentangenten-Winkels.

Die ständige Anpassung der Schweißkopforientierung an den sich verändernden Fugenverlauf durch Schwenken des Schweißkopfes um die Drehachse 7 bewirkt, daß der Brenner-Fugen-Winkel, nämlich den auf die Referenzebene E projizierte Winkel f zwischen der Schweißkopfachse A und der Fugentangente T in der Referenzebene E konstant gehalten wird. Da der Brenner-Fugen-Winkel konstant gehalten wird, bleibt die Stellung des Schweißkopfes zur Schweißfuge während des Schweißvorganges unverändert.

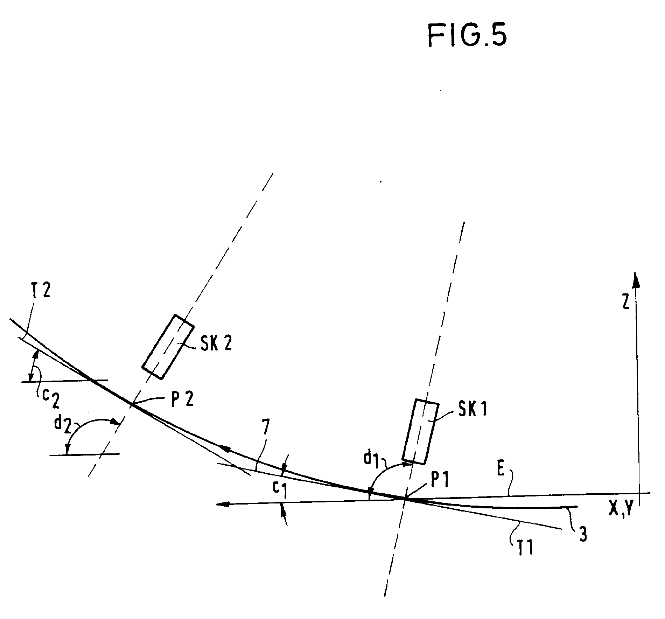

Bisher wurden nur Fälle ebener Schweißfugen behandelt. In Fig. 5 ist ein Beispiel dargestellt, bei dem die Schweißfuge nicht nur in der XY-Ebene verläuft, sondern sich auch in Z-Richtung verändert. Die in Fig. 5 dargestellte Projektion der Schweißfuge 3 stellt eine Ansicht parallel zur Referenzebene E dar, wobei die Fuge in Z-Richtung ansteigt. Dabei wird der Brenner-Neigungswinkel d entsprechend dem Fugen-Neigungswinkel c, der gemessen wird, verändert.

In einem ersten Schweißpunkt P1 hat der Schweißkopf SK1 einen Brenner-Neigungswinkel d₁ in Bezug auf die Referenzebene E. Dieser Brenner-Neigungswinkel ist so gewählt, daß sich ein bestimmter Neigungswinkel von beispielsweise 90° zwischen der Achse A und der momentanen Fugentangente T1 im Punkt P1 ergibt. Das Nachführsystem regelt die Position des Schweißkopfes so, daß der Schweißkopf dem Fugenverlauf folgt. Der Fugen-Neigungswinkel, also der Winkel zwischen der Referenzebene E und der Fugentangente T1, hat im ersten Schweißpunkt P1 den Wert c₁. Wenn der benachbarte Schweißpunkt P2 erreicht ist und der Schweißkopf die Position SK2 erreicht hat, hat sich der Fugen-Neigungswinkel auf den Wert c₂ verändert, der bei dem vorliegenden Ausführungsbeispiel von Fig. 5 größer ist als der Wert c₁. Entsprechend der Differenz (c₂ - c₁) wird der Wert des Brenner-Neigungswinkels d₁ auf den Wert d₂ vergrößert. Die Folge hiervon ist, daß der Brenner-Fugen-Neigungswinkel, den der Schweißkopf in Bezug auf die Fuge einnimmt, stets konstant bleibt, unabhängig von dem Grad der Steigung der Fuge 3.

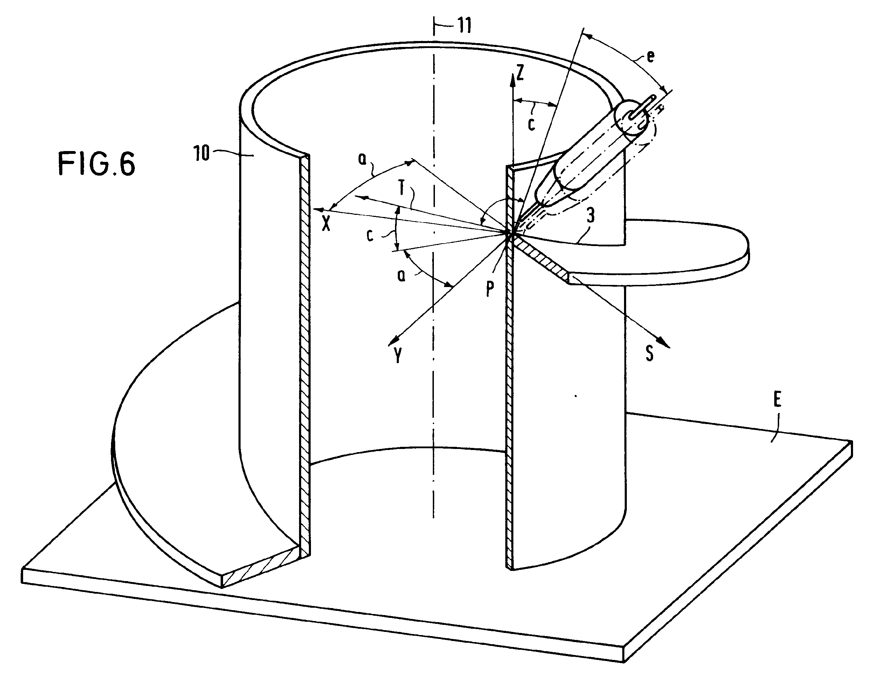

Fig. 6 zeigt eine schematische Anordnung des Schweißkopfes beim Kehlnahtschweißen eines nicht-ebenen Fugenverlaufes längs der Außenwandung eines Zylinders 10. Die Längsachse 11 des Zylinders steht dabei senkrecht auf der die Referenzebene E bildenden XY-Ebene des Koordinatensystems des Roboters. Die Orientierungsanpassung des Schweißkopfes an einen nicht-ebenen Fugenverlauf erfordert die Anpassung der Schweißkopfposition an die momentane Steigung der Schweißfuge. Neben den translatorischen Bewegungen längs der drei Raumachsen X,Y,Z und der rotatorischen Bewegung um die Drehachse (Z-Achse) führt der Schweißkopf dazu eine zusätzliche rotatorische Bewegung um die Achse s aus.

Der Schweißkopf ist nicht nur um den Anstellwinkel e gegenüber der Wand des Zylinders 10 geneigt, sondern bei Projektion auf die Werkstückwand auch noch um den Brenner-Neigungswinkel d, dessen Änderung der Änderung des Fugen-Neigungswinkels c entspricht. Im Fall eines ebenen Schweißfugenverlaufs ist der Fugen-Neigungswinkel c gleich Null (Fign. 2 und 3).

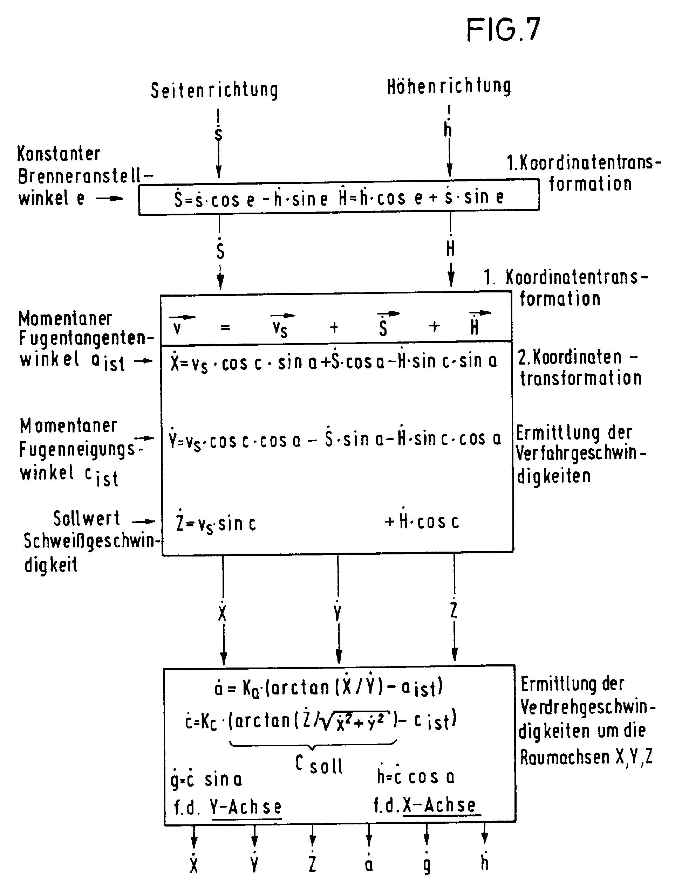

Die Ermittlung der Korrekturgeschwindigkeiten in Fugenhöhen- und Fugenseitenrichtung erfolgt bei dem Diagramm von Fig. 7 in gleicher Weise wie in Fig. 4. Zusätzlich wird bei der 2. Koordinatentransformation der Fugen-Neigungswinkel c berücksichtigt. Zunächst werden unter Berücksichtigung des gemessenen Fugen-Neigungswinkels c und des gemessenen Fugentangenten-Winkels a sowie der konstanten Bahngeschwindigkeit 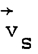 und der Korrekturgeschwindigkeiten in Fugen-Höhen- und Seitenrichtung S,H die Soll-Vorschubgeschwindigkeiten Ẋ,Ẏ,Ż in Richtung der X-, der Y- und der Z-Achse ermittelt.

Der Soll-Fugen-Neigungswinkel cₛₒₗₗ wird analog zu dem Fugentangenten-Winkel a aus den Soll-Vorschubgeschwindigkeiten Ẋ,Ẏ,Ż berechnet und mit dem gemessenen Ist-Fugen-Neigungswinkel cᵢₛₜ verglichen, um die Differenz zu ermitteln.

Der Schweißkopf wird dann mit einer zu der ermittelten Differenz proportionalen Verdrehgeschwindigkeit ċ um die zur Referenzebene E parallele, senkrecht auf der Fugentangente T stehende Achse S verschwenkt, wobei die Schwenkbewegung um die Achse S aus einer Überlagerung von rotatorischen Bewegungen um die X- und die Y-Achse erzeugt wird.

## Patentansprüche

1. Verfahren zur Steuerung eines Lichtbogen-Schweißkopfes, der in einem ortsfesten Koordinatensystem bewegbar ist, dessen XY-Ebene eine Referenzebene (E) bildet, wobei der Schweißkopf (SK) derart gesteuert wird, daß der Lichtbogen mit konstanter Bahngeschwindigkeit längs der Schweißfuge (3) bewegt wird und die Positionssteuerung entlang der Schweißfuge anhand der Schweißstrom- und/oder Schweißspannungswerte im Bereich der Fugenflanken erfolgt, indem in Abhängigkeit von dem Schweißstrom- und/oder der Schweißspannung bei Seiten- und Höhenabweichungen des Schweißkopfes von der Schweißfuge Korrekturwerte für die Schweißkopfbewegungen in Schweißkopf-Seitenrichtung und -Höhenrichtung ermittelt werden,
**dadurch gekennzeichnet**, daß aus der Bewegung des Schweißkopfes in X- und Y-Richtung der momentane Fugentangenten-Winkel (a), nämlich der Winkel zwischen der auf die Referenzebene (E) projizierten momentanen Vorschubrichtung (v) und der Y-Achse ermittelt wird,
daß die Änderung ( Δa) des Fugentangenten-Winkels (a) zwischen zwei aufeinanderfolgenden Schweißpositionen ermittelt wird und der Brenner-Orientierungswinkel (b), nämlich der Winkel zwischen der auf die Referenzebene (E) projizierten Brennerachse (A) und der Y-Achse in demselben Maß verändert wird, in dem sich der Fugentangenten-Winkel (a) geändert hat, derart, daß der Brenner-Fugen-Winkel (f), nämlich der Winkel zwischen der auf die Referenzebene projizierten Brennerachse und der auf die Referenzebene (E) projizierten momentanen Vorschubrichtung (v) konstant bleibt.

2. Verfahren nach Anspruch 1, dadurch gekennzeichnet, daß aus der Bewegung in X- und Y-Richtung und in einer dazu senkrecht stehenden Z-Richtung der momentane Fugen-Neigungswinkel (c), nämlich der Winkel zwischen der momentanen Vorschubrichtung (v) und ihrer Projektion auf die Referenzebene (E), ermittelt wird,
daß die Änderung ( Δ c) des Fugen-Neigungswinkels (c) zwischen zwei aufeinanderfolgenden Schweißpositionen ermittelt wird
und daß der Brenner-Neigungswinkel (d), nämlich der Winkel zwischen der auf eine senkrecht auf der Referenzebene (E) stehende Ebene der momentanen Vorschubrichtung (v) projizierten Brennerachse (A) und der Referenzebene (E) in demselben Maße verändert wird, in dem sich der Fugenneigungswinkel (c) geändert hat, derart, daß der Neigungswinkel des Brenners relativ zur Fuge konstant bleibt.

3. Verfahren nach Anspruch 1 oder 2, dadurch gekennzeichnet, daß die Änderung des Brenner-Orientierungswinkels dadurch erfolgt, daß der Brenner um eine durch den momentanen Schweißpunkt (P) hindurchgehende Vertikale (7) zur Referenzebene (E) geschwenkt wird.

4. Verfahren nach Anspruch 2 oder 3, dadurch gekennzeichnet, daß die Änderung des Brenner-Neigungswinkels (d) dadurch erfolgt, daß der Brenner um eine Achse (s) verschwenkt wird, die senkrecht auf der Fugentangente (T) steht und parallel zur Referenzebene (E) verläuft.

5. Verfahren nach einem der Ansprüche 1-4, dadurch gekennzeichnet, daß zur Ermittlung des Fugentangenten-Winkels (a) und des Brenner-Orientierungswinkels (b) die Geschwindigkeiten (Ẋ,Ẏ) der Bewegung in X- und Y-Richtung benutzt werden.

6. Verfahren nach einem der Ansprüche 2-4, dadurch gekennzeichnet, daß zur Ermittlung des Fugen-Neigungswinkels (c) und des Brenner-Neigungswinkels (d) die Geschwindigkeiten (Ẋ,Ẏ,Ż) der Bewegung in X-, Y- und Z-Richtung benutzt werden.

7. Verfahren nach einem der Ansprüche 1 bis 6, dadurch gekennzeichnet, daß die Korrekturwerte für die Schweißkopfbewegungen in Schweißkopf-Seitenrichtung und -Höhenrichtung die Korrekturgeschwindigkeiten (ṡ,ḣ) in Schweißkopf-Seitenrichtung und -Höhenrichtung sind,
daß aus den Korrekturgeschwindigkeiten (ṡ,ḣ) in Schweißkopf-Seiten- und Höhenrichtung und der konstanten Bahngeschwindigkeit (v̇ₛ) längs der Schweißfuge (3) die Soll-Vorschubgeschwindigkeiten (Ẋ,Ẏ,Ż) des Brenners längs der X-, der Y- und der Z-Achse bestimmt werden,
daß aus dem Verhältnis der Soll-Vorschubgeschwindigkeiten (Ẋ,Ẏ) längs der X- und der Y-Achse der Fugentangentenwinkel (aₛₒₗₗ) berechnet wird,
und daß der Brenner mit einer zu der Differenz zwischen dem berechneten Fugentangentenwinkel (aₛₒₗₗ) und dem momentanen Fugentangentenwinkel (aᵢₛₜ) proportionalen Verdrehgeschwindigkeit (ȧ) um die durch den momentanten Schweißpunkt (P) hindurchgehende Vertikale (7) zur Referenzebene (E) geschwenkt wird.

8. Verfahren nach Anspruch 7, dadurch gekennzeichnet, daß aus den Soll-Vorschubgeschwindigkeiten (Ẋ,Ẏ,Ż) des Brenners längs der X-, der Y- und der Z-Achse der Fugenneigungswinkel (cₛₒₗₗ) berechnet wird
und daß der Brenner mit einer zu der Differenz zwischen dem berechneten Fugenneigungswinkel (cₛₒₗₗ) und dem momentanen Fugenneigungswinkel (cᵢₛₜ) proportionalen Verdrehgeschwindigkeit (ċ) um die Achse (S) verschwenkt wird, die senkrecht auf der Fugentangente (T) steht und parallel zur Referenzebene (E) verläuft.

## Claims

1. A method for controlling an arc welding head movable within a stationary coordinate system, the XY plane of which forms a reference plane (E), said welding head (SK) being controlled such that said arc is moved along the welding groove (3) at a constant path speed and that the position control is effected along said welding groove by virtue of the values of the welding current and/or the welding voltage in the area of the groove flanks by detecting correction values for the welding head movements in the lateral and the vertical directions of said welding head in dependence on the welding current and/or the welding voltage when lateral and vertical deviations of said welding head from said welding groove occur,
characterised in
that the present groove tangent angle (a), i.e., the angle between the present feed direction (v) projected on said reference plane (E) and said Y axis, is calculated from the movement of said welding head in the X and Y directions,
that the change (Δa) of said groove tangent angle (a) is calculated between two subsequent welding positions, and the burner orientation angle (b), i.e., the angle between the burner axis (A) projected onto said reference plane (E) and said Y axis, is changed to the same extent to which the groove tangent angle (a) has changed such that the burner-groove angle (f), i.e., the angle between said burner axis projected onto said reference plane and the present feed direction (v) projected onto said reference plane (E), remains constant.

2. The method of claim 1, characterised in that, from the movement in the X and Y directions and in a direction Z perpendicular thereto, the present groove inclination angle (c), i.e., the angle between the present feed direction (v) and its projection onto said reference plane (E), is calculated,
that the change (Δc) of said groove inclination angle (c) is claculated between two subsequent welding positions,
and that the burner inclination angle (d), i.e., the angle between the burner axis (A), projected onto a plane of the present feed direction (v) that is perpendicular to said reference plane (E), and said reference plane (E) is changed to the same extent to which the groove inclination angle (c) has changed such that said burner inclination angle remains constant relative to said groove.

3. The method of claim 1 or 2, characterised in that the change of said burner orientation angle is effected by pivoting said burner around a vertical (7) to said reference plane (E), which vertical passes through the present welding spot (P).

4. The method of claim 2 or 3, characterised in that the change of said burner orientation angle (d) is effected by pivoting said burner around an axis (s) that is perpendicular to said groove tangent (T) and extends in parallel to said reference plane (E).

5. The method of one of claims 1-4, characterised in that the velocities (Ẋ, Ẏ) of the movement in the X and Y directions are employed to obtain said groove tangent angle (a) and said burner orientation angle (b).

6. The method of one of claims 2-4, characterised in that the velocities (Ẋ, Ẏ, Ż) of the movement in the X, Y and Z directions are employed to obtain said groove inclination angle (c) and said burner inclination angle (d).

7. The method of one of claims 1-6, characterised in that the correction values for the welding head movements in the lateral and vertical directions of said welding head are the correction speeds (ṡ, ḣ) in the lateral and vertical directions of said welding head,
that the target feed velocities (Ẋ, Ẏ, Ż) of said burner along said X, Y and Z axes are calculated from said correction speeds (ṡ, ḣ) in the lateral and vertical directions of said welding head and from the constant path verlocity (v̇ₛ) along said welding groove (3),
that said groove tangent angle (aₛₒₗₗ) is calculated from the relation between the set feed velocities (Ẋ, Ẏ) along the X and Y axes,
and that said burner is pivoted about said vertical (7) to said reference plane (E) passing through the present welding spot (P) at a pivoting speed (ȧ) that is proportional to the difference between said calculated groove tangent angle (aₛₒₗₗ) and the present groove tangent angle (aᵢₛₜ).

8. The method of claim 7, characterised in that said groove inclination angle (cₛₒₗₗ) is calculated from the target feed velocities (Ẋ, Ẏ, Ż) of said burner along said X, Y and Z axes,
and that said burner is pivoted around an axis (S) perpendicular to said groove tangent (T) and extending in parallel to said reference plane (E), at a pivoting speed (ċ) that is proportional to the difference between said calculated groove inclination angle (cₛₒₗₗ) and the present groove inclination angle (cᵢₛₜ).

## Revendications

1. Procédé de commande d'une tête de soudage à l'arc mobile dans un système de coordonnées fixe dont la plan XY constitue un plan de référence (E), la tête de soudage (SK) étant commandée de telle manière que l'arc est déplacé à vitesse de déplacement constante le long du joint de soudure (3) et que la commande de la position le long du joint de soudure se fait sur base des valeurs de courant de soudage et/ou de tension de soudage dans la zone des flancs du joint en déterminant en fonction du courant de soudage et/ou de la tension de soudage en cas de déviation latérale et de déviation en hauteur de la tête de soudage par rapport au joint de soudure, des valeurs de correction pour les déplacements de la tête de soudage en direction latérale et en direction en hauteur de la tête de soudage, caractérisé en ce
qu'à partir du déplacement de la tête de soudage en direction X et Y est déterminé l'angle momentané de la tangente du joint (a), à savoir l'angle entre la direction d'avance (v) momentanée projetée sur le plan de référence (E) et l'axe Y,
que la modification (Δa) de l'angle de la tangente du joint (a) entre deux positions de soudage successives est déterminée et que l'angle d'orientation du chalumeau (b), à savoir l'angle entre l'axe du chalumeau (A) projeté sur le plan de référence (E) et l'axe Y est modifié dans la même mesure que celle dans laquelle s'est modifié l'angle de la tangente du joint (a), de telle sorte que l'angle chalumeau-joint (f), à savoir l'angle entre l'axe du chalumeau projeté sur le plan de référence et la direction d'avance (v) momentanée projetée sur le plan de référence (E) reste constant.

2. Procédé suivant la revendication 1, caractérisé en ce
qu'à partir du déplacement en direction X et Y et dans une direction Z perpendiculaire à ces dernières est déterminé l'angle d'inclinaison (c) momentané du joint, à savoir l'angle entre la direction d'avance (v) momentanée et sa projection sur le plan de référence (E),
que la modification (Δc) de l'angle d'inclinaison du joint (c) entre deux positions de soudage successives est déterminée,
et que l'angle d'inclinaison du chalumeau (d), à savoir l'angle entre l'axe du chalumeau (A) projeté sur un plan de la direction d'avance (v) momentanée perpendiculaire au plan de référence (E), et le plan de référence (E) est modifié dans la même mesure que celle dans laquelle s'est modifié l'angle d'inclinaison du joint (c), de telle sorte que l'angle d'inclinaison du chalumeau par rapport au joint reste constant.

3. Procédé suivant la revendication 1 ou 2, caractérisé en ce que la modification de l'angle d'orientation du chalumeau s'effectue par le fait que le chalumeau est pivoté autour d'une verticale (7) au plan de référence (E) passant par le point de soudage (P) momentané.

4. Procédé suivant la revendication 2 ou 3, caractérisé en ce que la modification de l'angle d'inclinaison du chalumeau (d) s'effectue par le fait que le chalumeau est pivoté autour d'un axe (s) qui s'étend perpendiculairement à la tangente du joint (T) et parallèlement au plan de référence (E).

5. Procédé suivant l'une des revendications 1 à 4, caractérisé en ce que l'on utilise, pour la détermination de l'angle de la tangente du joint (a) et de l'angle d'orientation du chalumeau (b), les vitesses (Ẋ,Ẏ) du déplacement dans les directions X et Y.

6. Procédé suivant l'une des revendications 2 à 4, caractérisé en ce que l'on utilise, pour la détermination de l'angle d'inclinaison du joint (c) et de l'angle d'inclinaison du chalumeau (d), les vitesses (Ẋ,Ẏ,Ż) du déplacement dans les directions X, Y et Z.

7. Procédé suivant l'une des revendications 1 à 6, caractérisé en ce que les valeurs de correction pour les déplacements de la tête de soudage en direction latérale et en direction en hauteur de la tête de soudage sont les vitesses de correction (ṡ, ḣ) en direction latérale et en direction en hauteur de la tête de soudage,
qu'à partir des vitesses de correction (ṡ, ḣ) en direction latérale et en direction en hauteur de la tête de soudage et de la vitesse de déplacement constante (v̇ₛ) le long du joint de soudure (3) sont déterminées les vitesses d'avance nominales (Ẋ,Ẏ,Ż) du chalumeau le long de l'axe X, de l'axe Y et de l'axe Z,
qu'à partir du rapport entre les vitesses d'avance nominales (Ẋ,Ẏ) le long de l'axe X et de l'axe Y est calculé l'angle de la tangente du joint (a_{consigne}),
et que le chalumeau est pivoté, à une vitesse de rotation (ȧ) proportionnelle à la différence entre l'angle de la tangente du joint calculé (a_{consigne}) et l'angle de la tangente du joint momentané (a_{réel}), autour de la verticale (7) au plan de référence (E) passant par le point de soudage (P) momentané.

8. Procédé suivant la revendication 7, caractérisé en ce
qu'à partir des vitesses d'avance nominales (Ẋ,Ẏ,Ż) du chalumeau le long de l'axe X, de l'axe Y et de l'axe Z est calculé l'angle d'inclinaison du joint (c_{consigne}),
et que le chalumeau est pivoté, à une vitesse de rotation (ċ) proportionnelle à la différence entre l'angle d'inclinaison du joint calculé (c_{consigne}) et l'angle d'inclinaison du joint momentané (c_{réel}), autour de l'axe (S) qui est perpendiculaire à la tangente du joint (T) et s'étend parallèlement au plan de référence (E).
